# EUROPÄISCHE PATENTSCHRIFT

(11) **EP 3 581 473 B1**
(45) Veröffentlichungstag und Bekanntmachung des Hinweises auf die Patenterteilung: **08.06.2022**
(21) Anmeldenummer: 19168613.8
(22) Anmeldetag: 11.04.2019
(51) Int. Cl.: B62D 55/24, B29C 73/00, B29D 30/54, B62D 55/26, F16L 55/16

(54) **ELASTOMERBAND ZUM ÜBERTRAGEN EINER ANTRIEBSKRAFT BEI LANDWIRTSCHAFTLICHEN MASCHINEN UND VERFAHREN ZU DESSEN HERSTELLUNG SOWIE SYSTEM ZUR ÜBERWACHUNG DES ZUSTANDES EINES ELASTOMERBANDES**
ELASTOMER BELT FOR TRANSMITTING A DRIVE FORCE IN AGRICULTURAL MACHINES AND METHOD OF MANUFACTURING THE SAME, AND SYSTEM FOR MONITORING THE CONDITION OF AN ELASTOMER BELT
BANDE D'ÉLASTOMÈRE PERMETTANT DE TRANSMETTRE UNE FORCE D'ENTRAÎNEMENT DANS DES MACHINES AGRICOLES ET SON PROCÉDÉ DE FABRICATION AINSI QUE SYSTÈME DE SURVEILLANCE DE L'ÉTAT D'UNE BANDE D'ÉLASTOMÈRE

(30) Priorität: 15.06.2018 DE 102018114384
(43) Veröffentlichungstag der Anmeldung: 18.12.2019
(73) Patentinhaber: CLAAS Industrietechnik GmbH, 33106 Paderborn (DE)
(72) Erfinder: Morawitz, Martin, 33154 Salzkotten (DE); Meyer, Peter, 22927 Großhansdorf (DE); Franke, Christoph, 33129 Delbrück (DE); Verhorst, Jan-Willem, 59555 Lippstadt (DE)
(74) Vertreter: CLAAS Gruppe

(56) Entgegenhaltungen:
- EP-A1- 3 185 097
- EP-A1- 3 199 385
- EP-A2- 0 798 241
- EP-A2- 0 906 839
- WO-A1-2017/049393
- US-A1- 2006 016 534
- US-A1- 2007 175 554
- US-A1- 2015 191 173

## Beschreibung

Die Erfindung betrifft ein Elastomerband zum Übertragen einer Antriebskraft bei landwirtschaftlichen Maschinen und ein Verfahren zu dessen Herstellung. Die Erfindung betrifft ferner ein System zur Überwachung des Zustandes eines solchen Elastomerbandes.

Ein Elastomerband der hier angesprochenen Art ist aus der EP 3 185 097 A1 und US2006016534 bekannt.

Das Elastomerband ist dort ein Raupenband für ein Raupenlaufwerk einer landwirtschaftlichen Arbeitsmaschine. Das Raupenband hat einen Grundkörper aus Gummimaterial und eine Lauffläche zum Übertragen einer Antriebskraft auf einen Untergrund, wie beispielsweise eine Fahrbahn oder einen landwirtschaftlichen Boden. Bei dem Raupenband ist ein Temperatursensor vorgesehen, um die Materialtemperatur des Raupenbandes beispielsweise im Betrieb einer mit dem Raupenband ausgerüsteten Maschine zu erfassen. Dazu ist der Temperatursensor in das Gummimaterial des Raupenbandes eingebettet.

Es ist eine Aufgabe der Erfindung, wenigstens eine Alternative vorzuschlagen, um ein Elastomerband mit einem Sensorelement bereitzustellen.

Die Aufgabe wird mit einem Elastomerband gelöst, welches die Merkmale des Anspruches 1 aufweist. Die Aufgabe wird ferner mit einem Herstellungsverfahren gelöst, welches die Merkmale des Anspruches 12 aufweist. Zur Lösung der Aufgabe werden ferner ein System mit den Merkmalen des Anspruches 13, ein Nachrüstset mit den Merkmalen des Anspruches 14 und eine Verwendung mit den Merkmalen des Anspruches 15 vorgeschlagen. Vorteilhafte Ausführungsformen und/oder Ausgestaltungen und/oder Aspekte der Erfindung ergeben sich aus den Unteransprüchen, der nachfolgenden Beschreibung und den Figuren.

Ein grundlegendes Elastomerband zum Übertragen einer Antriebskraft, beispielsweise bei landwirtschaftlichen Maschinen umfasst einen, ein Elastomermaterial aufweisenden oder aus einem Elastomermaterial bestehenden Grundkörper, wenigstens eine Lauffläche zum Übertragen der Antriebskraft auf eine Gegenlauffläche und wenigstens ein Sensorelement. Das Sensorelement ist insbesondere eingerichtet, wenigstens eine physikalische und/oder chemische Eigenschaft des Elastomerbandes zu erfassen, insbesondere kontinuierlich oder diskontinuierlich zu erfassen. Beispielsweise ist das wenigstens eine Sensorelement eingerichtet, eine Temperatur und/oder Vibrationen zu erfassen, beispielsweise um die Temperatur und/oder etwaige Vibrationen des Elastomerbandes im Betrieb zu erfassen. Beispielsweise ist das Elastomerband ein endloses Elastomerband.

Bei einer Ausführungsform ist eine Stelle des Elastomerbandes als Befestigungsstelle für das wenigstens eine Sensorelement genutzt, wobei die Befestigungsstelle einer Oberfläche oder einem Oberflächenabschnitt des Elastomerbandes zugeordnet ist. Insbesondere ist das wenigstens eine Sensorelement an der Oberfläche des Elastomerbandes befestigt, insbesondere an der Oberfläche des Elastomerbandes direkt oder indirekt, beispielsweise unter Zwischenschaltung eines Zwischenelementes, befestigt. Unter der Bezeichnung "Oberfläche des Elastomerbandes" oder "Oberflächenabschnitt des Elastomerbandes" ist in der vorliegenden Beschreibung insbesondere eine Fläche oder ein Flächenabschnitt zu verstehen, welche bzw. welcher das Elastomerband und/oder den Grundkörper des Elastomerbandes von außen begrenzt.

Indem das wenigstens eine Sensorelement der Oberfläche oder dem Oberflächenabschnitt des Elastomerbandes zugeordnet ist, ergeben sich Vorteile bei der Ausrüstung des Elastomerbandes mit dem wenigstens Sensorelement. Denn das wenigstens eine Sensorelement kann nachträglich an dem wenigstens einen Sensorelement angebracht werden, ohne dass es dazu beispielsweise spezifische konstruktive Änderungen an dem Elastomerband bedarf oder allenfalls nur geringe konstruktive Änderungen vorzunehmen sind. Insofern kann auf handelsübliche Elastomerbänder zurückgegriffen werden, welche dann mit dem wenigstens einen Sensorelement nachgerüstet werden. Auch ist es begünstigt, einen Austausch des wenigstens einen Sensorelementes gegen ein anderes Sensorelement mit wenig Aufwand und kostengünstig vornehmen zu können. Insgesamt lassen sich durch diese Maßnahme Herstellungskosten und/oder Reparaturkosten reduzieren.

Unter dem Begriff "Elastomer" ist in der vorliegenden Beschreibung insbesondere ein formfester, aber elastisch verformbarer Kunststoff zu verstehen. Es ist unter dem Begriff "Elastomer" insbesondere Kautschuk und gummiähnlicher Kunststoff umfasst. Beispielsweise handelt es sich bei dem Begriff "Elastomer" um Vulkanisate von Kautschuk, insbesondere Natur- oder Synthesekautschuk.

Unter dem Begriff "Sensorelement" ist in der vorliegenden Beschreibung insbesondere ein technisches Bauteil zu verstehen, welches wenigstens eine physikalische und/oder chemische Eigenschaft des Elastomerbandes qualitativ oder als Messgröße quantitativ erfassen kann. Beispielsweise nutzt das Sensorelement dazu einen physikalischen oder chemischen Effekt, welcher erfasst wird und beispielsweise in ein weiterverarbeitbares elektrisches Signal umgeformt wird.

Es hat sich gezeigt, dass bestimmte Stellen des Elastomerbandes eine Erfassung der wenigstens einen physikalischen und/oder chemischen Eigenschaft des Elastomerbandes begünstigen. Es bietet sich daher an, dort die Befestigungsstelle für das wenigstens eine Sensorelement festzulegen. Beispielsweise ist die Befestigungsstelle an einer äußeren Wandungsfläche des Elastomerbandes vorgesehen. Beispielsweise ist die Befestigungsstelle an einer äußeren Wandung des Grundkörpers vorgesehen. Alternativ kann die Befestigungsstelle an einer Wandungsfläche einer Mulde, Vertiefung oder eines sonstigen Hohlraumes vorgesehen sein. Beispielsweise ist die Mulde, die Vertiefung oder der Hohlraum über eine Zugangsöffnung von außerhalb des Elastomerbandes, insbesondere von außen oder von einer Außenfläche des Elastomerbandes, erreichbar. Auch können mehrere Befestigungsstellen dieser Art vorgesehen sein, wobei beispielsweise eine der Befestigungsstellen an der äußeren Wandungsfläche des Elastomerbandes vorgesehen ist und die andere Befestigungsstelle an der Wandungsfläche der Mulde oder der Vertiefung oder des Hohlraumes vorgesehen ist.

Um eine möglichst lange Lebensdauer des wenigstens einen Sensorelementes zu begünstigen, sollte die Befestigungsstelle für das wenigstens eine Sensorelement sich außerhalb solcher Oberflächenabschnitte des Elastomerbandes befinden, welche direkt und unmittelbar von Kräften beaufschlagt werden. Dadurch ist eine Maßnahme ergriffen, um das wenigstens eine Sensorelement vor mechanischer Überbelastung zu schützen. Beispielsweise sollte die Befestigungsstelle außerhalb der Lauffläche liegen. Es kann vorgesehen sein, dass das Elastomerband wenigstens eine Führungsfläche zum Führen des Elastomerbandes gegen eine Gegenführungsfläche aufweist. In diesem Fall sollte die Befestigungsstelle ebenfalls außerhalb der Führungsfläche liegen.

Bei einer möglichen Ausführungsform ist das wenigstens eine Sensorelement auf die Oberfläche des Elastomerbandes geklebt. Dazu ist der eingesetzte Kleber insbesondere ausgebildet, eine Haftverbindung zwischen dem Material der Oberfläche des Elastomerbandes und dem Material der Oberfläche des Sensorelementes zu bilden. Dadurch ist eine technisch einfache Anbringung des wenigstens einen Sensorelementes begünstigt.

Ergänzend oder alternativ kann es vorgesehen sein, dass das wenigstens eine Sensorelement durch einen an die Oberfläche des Elastomerbandes, beispielsweise mittels eines Kleber, angeklebten Flicken oder dergleichen Abdeckelement gehalten ist. Auch durch diese Maßnahme eine technisch einfache Anbringung des wenigstens einen Sensorelementes begünstigt. Ferner ist ermöglicht der Flicken bzw. das Abdeckelement in gewissem Umfang einen Schutz des wenigstens einen Sensorelementes vor äußeren Einwirkungen.

Eine mögliche Ausführung kann darin bestehen, dass der Flicken bzw. das Abdeckelement aus einem Elastomermaterial besteht oder ein solches Elastomermaterial aufweist. Das Elastomermaterial kann identisch sein mit dem Elastomermaterial des Elastomerbandes, insbesondere dessen Grundkörpers. Beispielsweise ist das Elastomermaterial ein Gummi oder Kautschuk. Um den Flicken bzw. das Abdeckelement gegen die Oberfläche des Elastomerbandes zu kleben, ist insbesondere ein Kleber vorgesehen, welche eine Vulkanisierflüssigkeit, insbesondere Gummilösung ist. Dadurch ist es begünstigt, dass sich zwischen dem Flicken bzw. dem Abdeckelement und dem Elastomerband eine stabile und haltbare Klebeverbindung ausbildet. Beispielsweise sind der Flicken und der Kleber Bestandteile eines Reparaturkits, welches beispielsweise zum Reparieren eines beschädigten Fahrradschlauches, Gummibootes oder dergleichen dient.

Ergänzend oder alternativ kann es vorgesehen sein, dass das wenigstens eine Sensorelement durch eine an der Oberfläche des Elastomerbandes ausgehärtete oder abgebundene Abdeckmasse gehalten ist. Es ist insbesondere vorgesehen, dass die Abdeckmasse aus einem Elastomermaterial besteht oder ein solches Elastomermaterial aufweist. Das Elastomermaterial kann identisch sein mit dem Elastomermaterial des Elastomerbandes, insbesondere dessen Grundkörpers. Beispielsweise ist das Elastomermaterial ein Gummi oder Kautschuk.

Nach einer Ausführungsform ist das wenigstens eine Sensorelement eingerichtet, ein drahtlos zu übertragendes Signal zu erzeugen. Dadurch ist eine Signalübertragung mit relativ geringem Aufwand zu realisieren. Um ein möglichst starkes Signal zur Signalübertragung zu bringen, kann an der Befestigungsstelle im Bereich des wenigstens einen Sensorelementes ein Sendeleistung verstärkendes Material vorgesehen sein. Eine mögliche Ausführung besteht darin, dass das wenigstens eine Sensorelement eine RFID-Technik nutzt. Es kann zudem eine Kupferfolie oder ein Kupfergeflecht an der Befestigungsstelle vorgesehen sein, um auf diese Art und Weise die Sendeleistung des wenigstens einen Sensorelementes zu verstärken.

Das Elastomerband kann in unterschiedlichen Ausführungsformen zum Einsatz kommen. Eine mögliche Ausführungsform besteht darin, dass das Elastomerband ein Raupenband für ein Raupenlaufwerk, beispielsweise einer landwirtschaftlichen Maschine ist. In diesem Fall kann die Befestigungsstelle sich an einer Seitenwandung eines Stollens des Raupenbandes oder an der Oberfläche der Karkasse des Raupenbandes oder an einer Wandung eines Führungsblockes des Raupenbandes befinden.

Eine mögliche andere Ausführungsform besteht darin, dass das Elastomerband ein Reifen für ein Fahrzeugrad, beispielsweise einer landwirtschaftlichen Maschine ist. Bei der landwirtschaftlichen Maschine kann es sich um eine landwirtschaftliche Erntemaschine, beispielsweise eine Vollerntemaschine oder ein Anbaugerät handeln. Auch kann es sich bei der landwirtschaftlichen Maschine um einen Traktor handeln.

Eine mögliche andere Ausführungsform besteht darin, dass das Elastomerband ein Riemen, insbesondere Antriebsriemen, für einen Riementrieb, beispielsweise einer landwirtschaftlichen Maschine ist. Auch kann das Elastomerband ein Fördergurt für ein Förderband, beispielsweise einer landwirtschaftlichen Maschine sein.

Ein Aspekt der Erfindung betrifft ein Verfahren zur Herstellung des vorstehend beschriebenen Elastomerbandes. Das Verfahren umfasst die Schritte:
i) Bereitstellen eines Elastomerbandes zum Übertragen einer Antriebskraft, beispielsweise bei landwirtschaftlichen Maschinen;
ii) Bereitstellen wenigstens eines Sensorelementes, insbesondere das vorstehend beschriebene wenigstens eine Sensorelement, wobei das Sensorelement eingerichtet ist, wenigstens eine physikalische und/oder chemische Eigenschaft des Elastomerbandes zu erfassen;
iii) Anbringen des wenigstens einen Sensorlementes einer Befestigungsstelle, welche der Oberfläche des Elastomerbandes zugeordnet ist.

Beispielsweise wird der Schritt iii) derart ausgeführt, dass das wenigstens eine Sensorelement auf die Oberfläche des Elastomerbandes, insbesondere mittels eines Klebers, geklebt wird. Ergänzend oder alternativ kann eine Flicken oder ein Abdeckelement an die Oberfläche des Elastomerbandes, insbesondere mittels eines Klebers, geklebt werden, wobei das wenigstens eine Sensorelement zwischen dem Flicken bzw. dem Abdeckelement und der Oberfläche des Elastomerbandes angeordnet ist, insbesondere gehalten ist. Beispielsweise kann es vorgesehen sein, dass vor dem Anbringen des wenigstens einen Sensorelementes ein Sendeleistung verstärkendes Material, insbesondere Kupfer, wie beispielsweise eine Kupferfolie oder ein Kupfergeflecht an der Oberfläche des Elastomerbandes befestigt wird, insbesondere geklebt wird. Als Kleber können die vorstehend beschriebenen Kleber genutzt sein.

Ergänzend oder alternativ kann es vorgesehen sein, dass an der Befestigungsstelle eine aushärtbare oder abbindbare Abdeckmasse aufgebracht wird, um damit das wenigsten eine Sensorelement an der Befestigungsstelle zu befestigen, insbesondere an der Oberfläche des Elastomerbandes zu befestigen. Bei der Abdeckmasse kann es sich um die vorstehend beschriebene Abdeckmasse handeln.

Ein weiterer Aspekt der Erfindung betrifft ein System zur Überwachung des Zustandes eines, eine Antriebskraft übertragenden Elastomerbandes, beispielsweise bei einer landwirtschaftlichen Maschine. Das System umfasst wenigstens eine Ausführungsform und/oder Ausgestaltung des vorliegenden Elastomerbandes und eine Mikroprozessor gestützte Auswerteeinrichtung. Es ist insbesondere vorgesehen, dass die Auswerteeinrichtung eingerichtet ist, die von dem wenigstens einen Sensorelement des Elastomerbandes erzeugte Signale auszuwerten und Anweisungen zum Steuern und/oder Regeln der landwirtschaftlichen Maschine und/oder über Informationen über den Zustand des Elastomerbandes auszugeben.

Ein nochmals weiterer Aspekt der Erfindung betrifft ein Nachrüstset zum Nachrüsten eines Elastomerbandes mit wenigstens einem Sensorelementes. Bei dem Elastomerband kann es sich um wenigstens eine Ausführungsform und/oder Ausgestaltung des vorstehend beschriebenen Elastomerbandes handeln. Das Nachrüstset umfasst wenigstens ein Sensorelement, wenigstens einen Flicken oder dergleichen Abdeckelement und ein Behälter mit Kleber, insbesondere Vulkanisierflüssigkeit. Bei dem Sensorelement kann es sich um das vorstehend beschriebene Sensorelement handeln. Bei dem Flicken bzw. Abdeckelement kann es sich um den vorstehend beschriebenen Flicken oder das vorstehend beschriebene Abdeckelement handeln. Bei dem Kleber kann es sich um den vorstehend beschriebenen Kleber handeln.

Insbesondere ist das wenigstens eine Sensorelement eingerichtet, wenigstens eine physikalische und/oder chemische Eigenschaft des Elastomerbandes zu erfassen, insbesondere kontinuierlich oder diskontinuierlich zu erfassen. Insbesondere besteht der wenigstens eine Flicken bzw. das Abdeckelement aus einem Elastomermaterial oder weist ein solches Material auf. Insbesondere ist der wenigstens eine Flicken bzw. das Abdeckelement ausgebildet, das wenigstens eine Sensorelement an dem Elastomerband zu halten. Insbesondere ist der Kleber ausgebildet, eine Klebeverbindung zwischen dem Abdeckelement und der Oberfläche des Elastomerbandes herzustellen.

Weiterhin umfasst die Erfindung eine Verwendung von Reifen/Schlauch-Flickzeug zur Befestigung eines Sensorelementes an einem Elastomerband, welches beispielsweise bei einer landwirtschaftlichen Maschine zum Einsatz kommen kann. Das Elastomerband kann zum Übertragen einer Antriebskraft bei landwirtschaftlichen Maschinen dienen. Beispielsweise handelt es sich bei dem Elastomerband um wenigstens eine Ausführungsform und/oder Ausgestaltung des vorstehend beschriebenen Elastomerbandes.

Es ist insbesondere vorgesehen, dass das Flickzeug wenigstens einen Flicken oder ein sonstiges Abdeckelement und ein Behältnis mit einem Kleber zur Fixierung des Flickens bzw. des Abdeckelementes an der Befestigungsstelle des Elastomerbandes umfasst. Der Flicken bzw. das Abdeckelement kann aus einem Elastomermaterial bestehen oder ein solches Elastomermaterial aufweisen. Beispielsweise ist das Elastomermaterial identisch mit dem Material des Elastomerbandes bzw. dessen Grundkörpers. Beispielsweise ist der Kleber eine Vulkanisierflüssigkeit oder Gummilösung. Bei dem Flicken bzw. dem Abdeckelement kann es sich um den vorstehend beschriebenen Flicken bzw. Abdeckelement handeln. Bei dem Kleber kann es sich um den vorstehend beschriebenen Kleber handeln.

Weitere Einzelheiten und Merkmale der Erfindung ergeben sich aus der nachfolgenden Beschreibung wenigstens eines Ausführungsbeispiels anhand der Zeichnungen.

Es zeigen:
- Fig. 1: eine mögliche Ausführungsform eines Raupenlaufwerkes für eine landwirtschaftliche Maschine in einer Seitenansicht,
- Fig. 2: eine mögliche Ausführungsform eines Elastomerbandes zum Übertragen einer Antriebskraft in perspektivischer Darstellung,
- Fig. 3: einen vergrößerten Ausschnitt des Elastomerbandes der Figur 2 in einem Bereich eines nach außen stehenden Vorsprungs und einem dort angeordneten Sensorelement,
- Fig. 4: einen vergrößerten Ausschnitt des Elastomerbandes der Figur 2 in einem Bereich eines nach innen stehenden Vorsprungs und zweier dort angeordneten Sensorelementen und
- Fig. 5 bis 8: jeweils einen Ausschnitt des Elastomerbandes der Figur 2, wobei beispielhaft Schritte zur Anbringung eines Sensorelementes an der Oberfläche des Elastomerbandes aufgezeigt sind.

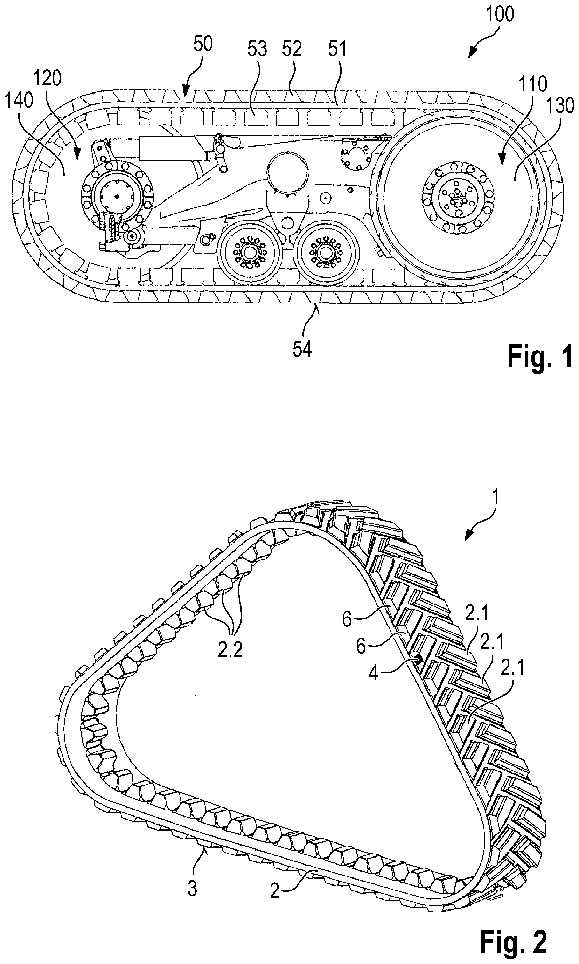

Figur 1 zeigt eine mögliche Ausführungsform eines Raupenlaufwerkes 100 in einem Teilschnitt als Seitenansicht. Das Raupenlaufwerk 100 kann in einer landwirtschaftlichen Maschine, beispielsweise einer landwirtschaftlichen Arbeitsmaschine, zum Einsatz kommen. Das Raupenlaufwerk 100 umfasst zwei zueinander beabstandete Laufradeinheiten 110, 120. Bevorzugt weisen die Laufradeinheiten 110, 120 jeweils zwei Laufräder 130 bzw. 140 auf, welche bezüglich der jeweiligen Laufradeinheit 110 bzw. 120 koaxial zueinander und in axialem Abstand vorliegen. In der Figur 1 ist bei der Laufradeinheit 110 das ersichtliche Laufrad 130 das vordere Laufrad und bei der Laufradeinheit 120 - aufgrund der Teilschnittdarstellung - das ersichtliche Laufrad 140 das hintere Laufrad.

Das Raupenlaufwerkt 100 umfasst ferner ein Raupenband 50, welches zum Übertragen einer Antriebskraft auf einen Untergrund, wie beispielsweise eine Fahrbahn oder einen landwirtschaftlichen Boden dient. Das Raupenband 50 hat eine Karkasse 51 und nach außen weisende Stollen 52. Bevorzugt hat das Raupenband 50 ferner nach innen weisende Führungsblöcke 53. Bevorzugt bilden die Außenseiten der Stollen 52 eine Lauffläche 54, welche mit dem Untergrund in Kontakt tritt bzw. zumindest teilweise in Kontakt steht.

Bevorzugt umschlingt das Raupenband 50 die beiden Laufradeinheiten 110, 120. Bevorzugt ist das Raupenband 50 derart angeordnet, dass die Führungsblöcke 53 zwischen den Laufrädern 130 bzw. 140 einer jeden Laufradeinheit 110 bzw. 120 zu liegen kommen und somit das Raupenband 50 dadurch quer zu seiner Längserstreckung durch die jeweiligen Laufräder 130 bzw. 140 geführt ist.

Figur 2 zeigt eine mögliche Ausführungsform eines beispielsweise endlosen Elastomerbandes 1 zum Übertragen einer Antriebskraft. Das Elastomerband 1 kann als das Raupenband 50 des Raupenlaufwerkes 100 der Figur 1 zum Einsatz kommen. Das Elastomerband 1 umfasst einen Grundkörper 2 und wenigstens eine Lauffläche 3 zum Übertragen der Antriebskraft auf eine (in der Figur 2 nicht dargestellte) Gegenlauffläche. Der Grundkörper 2 ist aus einem Elastomermaterial gebildet oder weist Elastomermaterial auf.

Das Elastomerband 1 kann von dem Grundkörper 2 nach außen stehende Vorsprünge 2.1 aufweisen, welche beispielsweis ein Profil bilden. Bevorzugt sind die Vorsprünge 2.1 an dem Grundkörper 2 angeformt. Beispielsweise sind die Vorsprünge 2.1 in Art der Stollen 52 des Raupenbandes 50 ausgebildet. Das Elastomerband 1 kann ferner von dem Grundkörper 2 nach innen stehende Vorsprünge 2.2 aufweisen. Bevorzugt sind die Vorsprünge 2.2 an dem Grundkörper 2 angeformt. Beispielsweise sind die Vorsprünge 2.2 in Art der Führungsblöcke 53 des Raupenbandes 50 ausgebildet.

In der Figur 2 ist beispielhaft angedeutet, dass bei dem Elastomerband 1 ein Sensorelement 4 vorgesehen sein kann. Bevorzugt ist das Sensorelement 4 eingerichtet, wenigstens eine physikalische und/oder chemische Eigenschaft des Elastomerbandes 1 zu erfassen. Beispielsweise dient das Sensorelement 4 zum Erfassen der Temperatur und/oder etwaiger Vibrationen des Elastomerbandes 1 beispielsweise im Betrieb. Bevorzugt ist das Sensorelement 4 eingerichtet, ein drahtlos zu übertragendes Signal zu erzeugen. Beispielsweise nutzt das Sensorelement 4 dazu RFID-Technik.

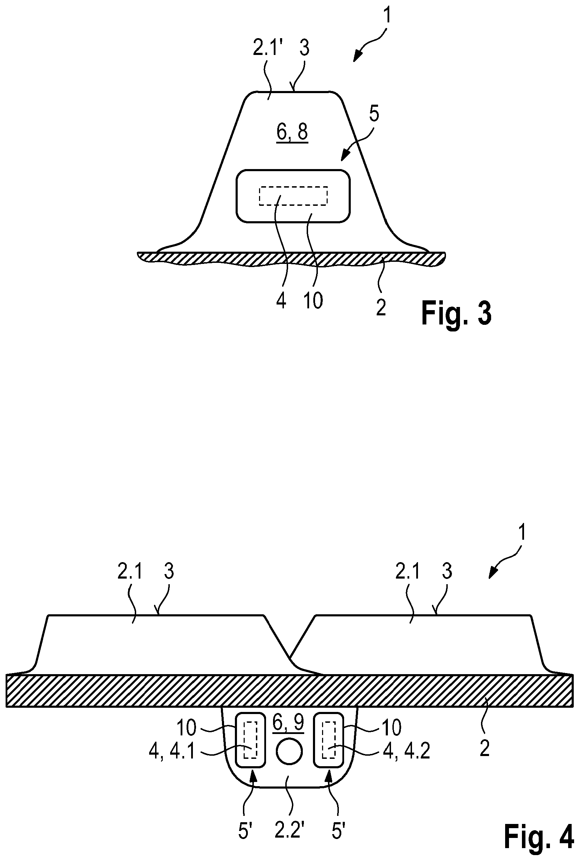

Bevorzugt ist das Sensorelement 4 einem Oberflächenabschnitt 6 des Elastomerbandes 1 zugeordnet. Bevorzugt ist das Sensorelement 4 an dem Oberflächenabschnitt 6 des Elastomerbandes 1 befestigt, also von außen gegen die Oberfläche des Elastomerbandes 1 aufgebracht oder angebracht. Mögliche Anbringungsorte für das Sensorelement 4 sind in Figuren 3 und 4 beispielhaft dargestellt. Die Anbringungsorte können auch gemeinsam genutzt sein, so dass neben dem Sensorelement 4 dann auch weitere Sensorelemente vorliegen.

Die Figuren 3 und 4 zeigen jeweils einen vergrößerten Ausschnitt des Elastomerbandes 1 der Figur 2 als Teilschnitt. Die Figur 3 zeigt das Elastomerband 1 im Bereich eines der nach oben weisenden Vorsprünge 2.1, wobei der eine Vorsprung 2.1' in einer Seitenansicht und der Grundkörper 2 des Elastomerbandes 1 in einem Längsschnitt dargestellt sind. Die Figur 4 zeigt das Elastomerband 1 im Bereich eines der nach unten weisenden Vorsprünge 2.2, wobei der eine Vorsprung 2.2' in einer Seitenansicht und der Grundkörper 2 des Elastomerbandes 1 in einem Querschnitt dargestellt sind.

Wie anhand des Beispiels der Figur 3 ersichtlich ist, kann eine Befestigungsstelle 5 für das Sensorelement 4 durch eine Wandungsfläche 8, insbesondere äußere Wandungsfläche, des einen Vorsprunges 2.1' gebildet sein. Beispielsweise ist die Wandungsfläche 8 eine in Längsrichtung des Elastomerbandes 1 vorliegende Wandungsfläche des einen Vorsprunges 2.1'. In der Figur 3 ist ferner angedeutet, dass zur Befestigung des Sensorelementes 4 an der Wandungsfläche 8 ein Abdeckelement 10 bzw. Flicken vorgesehen sein kann.

Beispielsweise ist das Abdeckelement 10 mittels eines Klebers gegen die Wandungsfläche 8 geklebt und zwischen dem Abdeckelement 10 und der Wandungsfläche 8 ist das Sensorelement 4 angeordnet. Auf diese Weise ist das Sensorelement 4 durch das Abdeckelement 10 an der Wandungsfläche 8 gehalten. Bevorzugt besteht das Abdeckelement 10 aus einem Elastomermaterial oder weist ein solches Elastomermaterial auf. Das Elastomermaterial kann identisch sein mit dem Elastomermaterial des Elastomerbandes 1 sein. Bevorzugt ist der Kleber eine Vulkanisierflüssigkeit.

Wie anhand des Beispiels der Figur 4 ersichtlich ist, kann eine weitere Befestigungsstelle 5' für das Sensorelement 4 durch eine Wandungsfläche 9, insbesondere äußere Wandungsfläche, des einen Vorsprunges 2.2' gebildet sein. Beispielsweise ist die Wandungsfläche 9 eine quer zur Längsrichtung des Elastomerbandes 1 vorliegende Wandungsfläche des einen Vorsprunges 2.2'. Auch bei diesem Beispiel kann das bereits zu der Figur 3 beschriebene Abdeckelement 10 vorgesehen sein, um das Sensorelement 4 an der Wandungsfläche 9 anzubringen. Das Sensorelement 4 kann beispielsweise im Bereich der Befestigungsstelle 5' zweifach oder mehrfach vorgesehen sein. Beispielsweise sind dann ein erstes Sensorelement 4.1 und ein zweites Sensorelement 4.2 in einem vorgegebenen Abstand zueinander angeordnet.

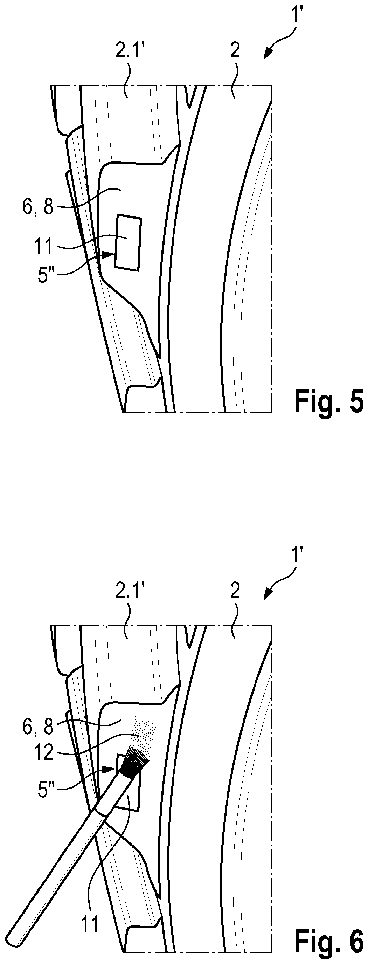

Figuren 5 bis 8 zeigen beispielhaft einzelne Etappen bei der Montage des Sensorelementes 4 an der Oberfläche eines Elastomerbandes 1', um das vorstehend beschriebene Elastomerband 1 herzustellen. Bevorzugt wird in einem vorgelagerten Schritt eine vorgesehene Befestigungsstelle 5" an der Oberfläche 6 des Elastomerbandes 1' gereinigt. Es kann in einem weiteren vorgelagerten Schritt eine die Sendeleistung des Sensorelementes 4 verstärkende Materialschicht 11, wie beispielsweise eine Kupfer enthaltende Materialschicht, insbesondere eine Kupferfolie oder ein Kupfergeflecht, an der Oberfläche 6 des Elastomerbandes 1 angebracht werden, beispielsweise angeklebt werden (Figur 5). Bevorzugt überdeckt die Materialschicht 11 den Bereich um die Befestigungsstelle 5" für das Sensorelement 4.

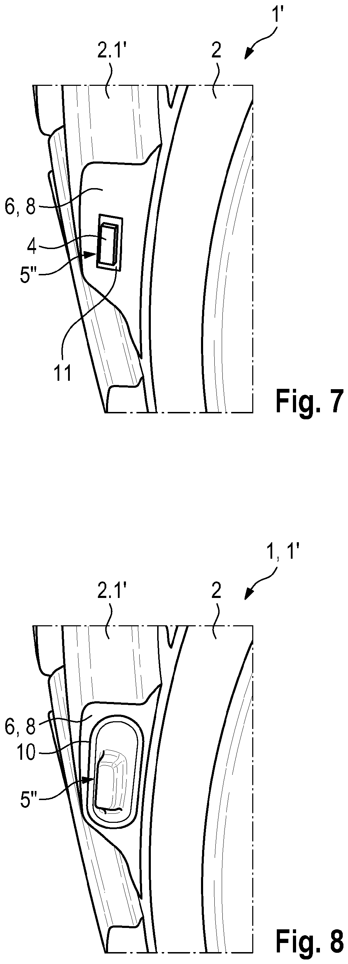

In einem weiteren Schritt wird der Bereich um die Befestigungsstelle 5" mit einem Kleber 12 bestrichen (Figur 6) und anschließend darauf das Sensorelement 4 an der Befestigungsstelle 5" positioniert (Figur 7). Danach wird das bereits vorstehend beschriebene Abdeckelement 10 auf den Bereich der Befestigungsstelle 5" aufgebracht und geht mit dem Kleber eine Klebeverbindung ein (Figur 8). Es wird also durch das Abdeckelement 10 das Sensorelement 4 überklebt, beispielsweise um dadurch das Sensorelement 4 in seiner Position an dem Elastomerband 1' zu halten. Es ist nunmehr das Elastomerband 1 hergestellt.

In der vorliegenden Beschreibung bedeutet die Bezugnahme auf einen bestimmten Aspekt oder eine bestimmte Ausführungsform oder eine bestimmte Ausgestaltung, dass ein bestimmtes Merkmal oder eine bestimmte Eigenschaft, die in Verbindung mit dem jeweiligen Aspekt oder der jeweiligen Ausführungsform oder der jeweiligen Ausgestaltung beschrieben ist, zumindest dort enthalten ist, aber nicht notwendigerweise in allen Aspekten oder Ausführungsformen oder Ausgestaltungen der Erfindung enthalten sein muss. Es wird ausdrücklich darauf hingewiesen, dass jede Kombination der verschiedenen Merkmale und/oder Strukturen und/oder Eigenschaften, welche in Bezug auf die Erfindung beschrieben sind, von der Erfindung umfasst sind, sofern dies nicht ausdrücklich oder eindeutig durch den Zusammenhang widerlegt ist.

Die Verwendung von einzelnen oder allen Beispielen oder einer beispielhaften Ausdrucksweise im Text soll lediglich die Erfindung beleuchten und stellt keine Beschränkung hinsichtlich des Umfangs der Erfindung dar, wenn nichts anders behauptet wird. Auch ist keine Ausdrucksweise oder Formulierung der Beschreibung so zu verstehen, dass es sich um ein nicht beanspruchtes, aber für die Praxis der Erfindung wesentliches Element handelt ist.

### Bezugszeichenliste

- 1: Elastomerband
- 2: Grundkörper
- 2.1: Vorsprünge
- 2.1': Vorsprung
- 2.2: Vorsprünge
- 2.2': Vorsprung
- 3: Lauffläche
- 4: Sensorelement
- 4.1: erstes Sensorelement
- 4.2: zweites Sensorelement
- 5: Befestigungsstelle
- 5': Befestigungsstelle
- 5": Befestigungsstelle
- 6: Oberflächenabschnitt
- 8: Wandungsfläche
- 9: Wandungsfläche
- 10: Abdeckelement
- 11: Materialschicht
- 12: Kleber

- 50: Raupenband
- 51: Karkasse
- 52: Stollen
- 53: Führungsblock
- 54: Lauffläche

- 100: Raupenlaufwerk
- 110: Laufradeinheit
- 120: Laufradeinheit
- 130: Laufrad
- 140: Laufrad

## Patentansprüche

1. Elastomerband (1) zum Übertragen einer Antriebskraft bei landwirtschaftlichen Maschinen, das Elastomerband (1) umfassend einen, ein Elastomermaterial aufweisenden oder aus einem Elastomermaterial bestehenden Grundkörper (2), wenigstens eine Lauffläche (3) zum Übertragen der Antriebskraft auf eine Gegenlauffläche und wenigstens ein Sensorelement (4), wobei das Sensorelement (4) eingerichtet ist, wenigstens eine physikalische und/oder chemische Eigenschaft des Elastomerbandes (1) zu erfassen, **dadurch gekennzeichnet, dass** eine Stelle des Elastomerbandes (1) als Befestigungsstelle (5; 5'; 5") für das wenigstens eine Sensorelement (4) genutzt ist, wobei die Befestigungsstelle (5; 5'; 5") einem Oberflächenabschnitt (6) des Elastomerbandes (1) zugeordnet ist, wobei das Elastomerband (1) ein Raupenband (50) für ein Raupenlaufwerk (100) ist und sich die Befestigungsstelle (5; 5'; 5") an einer Seitenwandung eines Stollens (52) des Raupenbandes (50) oder an der Oberfläche der Karkasse (51) des Raupenbandes (50) oder an einer Wandung eines Führungsblockes (53) des Raupenbandes (50) befindet und eine mikroprozessorgestützte Auswerteinrichtung zur Überwachung des Zustandes eines, eine Antriebskraft übertragenden Elastomerbandes (1) an einer landwirtschaftlichen Maschine vorgesehen ist, wobei die Auswerteeinrichtung eingerichtet ist, die von dem wenigstens einen Sensorelement (4) des Elastomerbandes (1) erzeugten Signale auszuwerten und Anweisungen zum Steuern und/oder Regeln der landwirtschaftlichen Maschine und/oder Informationen über den Zustand des Elastomerbandes (1) auszugeben.

2. Elastomerband nach Anspruch 1, **dadurch gekennzeichnet, dass** die Befestigungsstelle (5) an einer äußeren Wandungsfläche (8; 9) des Elastomerbandes (1) vorgesehen ist.

3. Elastomerband nach Anspruch 1, **dadurch gekennzeichnet, dass** die Befestigungsstelle an einer Wandungsfläche einer Mulde, Vertiefung oder eines sonstigen Hohlraumes vorgesehen ist, welche über eine Zugangsöffnung von außerhalb des Elastomerbandes (1) erreichbar ist.

4. Elastomerband nach einem der vorhergehenden Ansprüche, **dadurch gekennzeichnet, dass** die Befestigungsstelle (5; 5'; 5") außerhalb der Lauffläche (3) liegt.

5. Elastomerband nach einem der vorhergehenden Ansprüche, **dadurch gekennzeichnet, dass** das wenigstens eine Sensorelement (4) auf den Oberflächenabschnitt (6) des Elastomerbandes (1) geklebt ist.

6. Elastomerband nach einem der vorhergehenden Ansprüche, **dadurch gekennzeichnet, dass** das wenigstens eine Sensorelement (4) durch einen an den Oberflächenabschnitt (6) des Elastomerbandes (1) angeklebten Flicken oder dergleichen Abdeckelement (10) oder durch eine an dem Oberflächenabschnitt (6) des Elastomerbandes (1) ausgehärtete oder abgebundene Abdeckmasse gehalten ist.

7. Elastomerband nach einem der vorhergehenden Ansprüche, **dadurch gekennzeichnet, dass** das wenigstens eine Sensorelement (4) eingerichtet ist, ein drahtlos zu übertragendes Signal zu erzeugen, und ferner ein Sendungsleistung verstärkendes Material (11) an der Befestigungsstelle (5") im Bereich des wenigstens einen Sensorelementes (4) vorgesehen ist.

8. Elastomerband nach einem der vorhergehenden Ansprüche, **dadurch gekennzeichnet, dass** das wenigstens eine Sensorelement (4) eine RFID-Technik nutzt und eine Kupferfolie oder ein Kupfergeflecht an der Befestigungsstelle (5") vorgesehen ist.

9. Verfahren zur Herstellung eines Elastomerbandes (1) nach Anspruch 1 umfassend die Schritte:
i) Bereitstellen eines Elastomerbandes (1') zum Übertragen einer Antriebskraft bei landwirtschaftlichen Maschinen;
ii) Bereitstellen wenigstens eines Sensorelementes (4), wobei das Sensorelement (4) eingerichtet ist, wenigstens eine physikalische und/oder chemische Eigenschaft des Elastomerbandes (1') zu erfassen;
iii) Anbringen des wenigstens einen Sensorelementes (4) an einer Befestigungsstelle (5"), welche einem Oberflächenabschnitt (6) des Elastomerbandes (1') zugeordnet ist.

10. Nachrüstset zum Nachrüsten eines Elastomerbandes (1) mit wenigstens einem Sensorelement (4), das Nachrüstset umfassend wenigstens ein Sensorelement (4), wenigstens einen Flicken oder dergleichen Abdeckelement (10) und ein Behältnis mit Kleber, insbesondere Vulkanisierflüssigkeit, wobei das wenigstens eine Sensorelement (4) eingerichtet ist, wenigstens eine physikalische und/oder chemische Eigenschaft des Elastomerbandes (1) zu erfassen, wobei das wenigstens eine Abdeckelement (10) aus einem Elastomermaterial besteht oder ein Elastomermaterial aufweist und ausgebildet ist, das wenigstens eine Sensorelement (4) an dem Elastomerband (1) zu halten und wobei der Kleber ausgebildet ist, eine Klebeverbindung zwischen dem Abdeckelement (10) und einem Oberflächenabschnitt (6) des Elastomerbandes (1) herzustellen.

11. Verwendung von Reifen/Schlauch-Flickzeug zur Befestigung eines Sensorelementes (4) an einem Elastomerband (1 ) nach Anspruch 1.

## Claims

1. An elastomer belt (1) for the transmission of a driving force in agricultural machines, the elastomer belt (1) comprising a main body (2) having an elastomer material or consisting of an elastomer material, at least one running surface (3) for transmitting the driving force to a counteracting surface and at least one sensor element (4), wherein the sensor element (4) is configured to detect at least one physical and/or chemical property of the elastomer belt (1), **characterized in that** a point of the elastomer belt (1) is used as an attachment point (5; 5'; 5") for the at least one sensor element (4), wherein the attachment point (5; 5'; 5") is associated with a surface section (6) of the elastomer belt (1), wherein the elastomer belt (1) is a crawler belt (50) for a crawler track unit (100) and the attachment point (5; 5'; 5") is located at a side wall of a stud (52) of the crawler belt (50) or on the surface of the carcass (51) of the crawler belt (50) or on a wall of a guiding block (53) of the crawler belt (50) and a microprocessor-supported analysing device is provided for monitoring the condition of an elastomer belt (1) on an agricultural machine which transmits a driving force, wherein the analysing device is configured to analyse the signals produced by the at least one sensor element (4) of the elastomer belt (1) and to output instructions for controlling and/or setting the agricultural machine and/or to output information regarding the condition of the elastomer belt (1).

2. The elastomer belt according to claim 1, **characterized in that** the attachment point (5) is provided on an outer wall surface (8; 9) of the elastomer belt (1).

3. The elastomer belt according to claim 1, **characterized in that** the attachment point is provided on a wall surface of a recess, depression or any other cavity which can be reached from the outside of the elastomer belt (1) via an access opening.

4. The elastomer belt according to one of the preceding claims, **characterized in that** the attachment point (5; 5'; 5") lies outside the running surface (3).

5. The elastomer belt according to one of the preceding claims, **characterized in that** the at least one sensor element (4) is bonded to the surface section (6) of the elastomer belt (1).

6. The elastomer belt according to one of the preceding claims, **characterized in that** at least one sensor element (4) is retained by means of a patch or similar covering element (10) bonded to the surface section (6) of the elastomer belt (1) or retained on the surface section (6) of the elastomer belt (1) by means of a cured or hardened covering compound.

7. The elastomer belt according to one of the preceding claims, **characterized in that** the at least one sensor element (4) is configured to produce a signal which is to be transmitted wirelessly and furthermore, a transmitting power strengthening material (11) is provided at the attachment point (5") in the region of the at least one sensor element (4).

8. The elastomer belt according to one of the preceding claims, **characterized in that** the at least one sensor element (4) uses RFID technology and is provided with a copper film or a copper mesh at the attachment point (5").

9. A method for the production of an elastomer belt (1) according to claim 1, comprising the steps of:
i) providing an elastomer belt (1') for transmitting a driving force in agricultural machines;
ii) providing at least one sensor element (4), wherein the sensor element (4) is configured to detect at least one physical and/or chemical property of the elastomer belt (1');
iii) fitting the at least one sensor element (4) at an attachment point (5") which is associated with a surface section (6) of the elastomer belt (1').

10. A retrofitting set for retrofitting an elastomer belt (1) with at least one sensor element (4), the retrofitting set comprising at least one sensor element (4), at least one patch or similar covering element (10) and a container with adhesive, in particular vulcanizing fluid, wherein the at least one sensor element (4) is configured to detect at least one physical and/or chemical property of the elastomer belt (1), wherein the at least one covering element (10) consists of an elastomer material or comprises an elastomer material and is configured to retain the at least one sensor element (4) on the elastomer belt (1) and wherein the adhesive is configured to produce an adhesive bond between the covering element (10) and a surface section (6) of the elastomer belt (1).

11. Use of a tyre/inner tube repair kit for attaching a sensor element (4) to an elastomer belt (1) according to claim 1.

## Revendications

1. Bande d'élastomère (1) pour transmettre une force d'entraînement dans le cas de machines agricoles, la bande d'élastomère (1) incluant un corps de base (2) comportant un matériau élastomère ou constitué d'un matériau élastomère, au moins une surface de roulement (3) pour transmettre la force d'entraînement à une surface de roulement antagoniste, et au moins un élément de capteur (4), l'élément de capteur (4) étant agencé pour détecter au moins une propriété physique et/ou chimique de la bande d'élastomère (1), **caractérisée en ce qu'**un endroit de la bande d'élastomère (1) est utilisé comme endroit de fixation (5 ; 5' ; 5") pour au moins un élément de capteur (4), l'endroit de fixation (5 ; 5' ; 5") étant associé à une portion de surface (6) de la bande d'élastomère (1), la bande d'élastomère (1) étant une bande de chenille (50) pour un train de roulement à chenilles (100), et l'endroit de fixation (5 ; 5' ; 5") se trouvant sur une paroi latérale d'un crampon (52) de la bande de chenille (50) ou sur la surface de la carcasse (51) de la bande de chenille (50) ou sur une paroi d'un bloc de guidage (53) de la bande de chenille (50), et un équipement d'analyse assisté par microprocesseur étant prévu sur une machine agricole pour surveiller l'état d'une bande d'élastomère (1) transmettant une force d'entraînement, l'équipement d'analyse étant agencé pour analyser les signaux générés par le au moins un élément de capteur (4) de la bande d'élastomère (1) et pour délivrer des instructions pour commander et/ou réguler la machine agricole et/ou des informations sur l'état de la bande d'élastomère (1).

2. Bande d'élastomère selon la revendication 1, **caractérisée en ce que** l'endroit de fixation (5) est prévu sur une surface de paroi extérieure (8 ; 9) de la bande d'élastomère (1).

3. Bande d'élastomère selon la revendication 1, **caractérisée en ce que** l'endroit de fixation est prévu sur une surface de paroi d'un creux, d'un renfoncement ou d'une cavité autre, laquelle est accessible depuis l'extérieur de la bande d'élastomère (1) par l'intermédiaire d'une ouverture d'accès.

4. Bande d'élastomère selon une des revendications précédentes, **caractérisée en ce que** l'endroit de fixation (5 ; 5' ; 5") se trouve à l'extérieur de la surface de roulement (3).

5. Bande d'élastomère selon une des revendications précédentes, **caractérisée en ce que** le au moins un élément de capteur (4) est collé à la portion de surface (6) de la bande d'élastomère (1).

6. Bande d'élastomère selon une des revendications précédentes, **caractérisée en ce que** le au moins un élément de capteur (4) est maintenu par une rustine ou par un élément de recouvrement analogue (10) collé à la portion de surface (6) de la bande d'élastomère (1) ou par une masse de recouvrement durcie ou prise sur la portion de surface (6) de la bande d'élastomère (1) .

7. Bande d'élastomère selon une des revendications précédentes, **caractérisée en ce que** le au moins un élément de capteur (4) est agencé pour générer un signal à transmettre sans fil, et en outre un matériau (11) amplifiant la puissance d'émission est prévu à l'endroit de fixation (5") dans la zone du au moins un élément de capteur (4).

8. Bande d'élastomère selon une des revendications précédentes, **caractérisée en ce que** le au moins un élément de capteur (4) utilise une technique RFID, et une feuille de cuivre ou une tresse de cuivre est prévue à l'endroit de fixation (5").

9. Procédé de fabrication d'une bande d'élastomère (1) selon la revendication 1, incluant les étapes :
i) Fourniture d'une bande d'élastomère (1') pour transférer une force d'entraînement dans le cas de machines agricoles ;
ii) Fourniture au moins d'un élément de capteur (4), l'élément de capteur (4) étant agencé pour détecter au moins une propriété physique et/ou chimique de la bande d'élastomère (1') ;
iii) Pose du au moins un élément de capteur (4) à un endroit de fixation (5") qui est associé à une portion de surface (6) de la bande d'élastomère (1').

10. Lot de mise à niveau pour mettre à niveau une bande d'élastomère (1), comprenant au moins un élément de capteur (4), le lot de mise à niveau incluant au moins un élément de capteur (4), au moins une rustine ou un élément de recouvrement analogue (10) et un contenant avec de l'adhésif, en particulier du liquide de vulcanisation, le au moins un élément de capteur (4) étant agencé pour détecter au moins une propriété physique et/ou chimique de la bande d'élastomère (1), le au moins un élément de recouvrement (10) étant constitué d'un matériau élastomère ou comportant un matériau élastomère et étant conçu pour maintenir le au moins un élément de capteur (4) contre la bande d'élastomère (1), et l'adhésif étant conçu pour créer une liaison collée entre l'élément de recouvrement (10) et une portion de surface (6) de la bande d'élastomère (1).

11. Utilisation de moyen de réparation pour chambres à air/ pneumatiques afin de fixer un élément de capteur (4) à une bande d'élastomère (1) selon la revendication 1.
